Europäisches Patentamt

European Patent Office

Office européen des brevets

(19)

(11) Veröffentlichungsnummer : **0 444 737 B1**

(12) **EUROPÄISCHE PATENTSCHRIFT**

(45) Veröffentlichungstag der Patentschrift :
16.08.95 Patentblatt 95/33

(51) Int. Cl.$^6$ : **H04N 5/32**

(21) Anmeldenummer : **91200358.9**

(22) Anmeldetag : **20.02.91**

(54) **Anordnung zum Abtasten einer Röntgenaufnahme.**

(30) Priorität : **28.02.90 DE 4006181**

(43) Veröffentlichungstag der Anmeldung :
**04.09.91 Patentblatt 91/36**

(45) Bekanntmachung des Hinweises auf die
Patenterteilung :
**16.08.95 Patentblatt 95/33**

(84) Benannte Vertragsstaaten :
**DE FR GB**

(56) Entgegenhaltungen :
**EP-A- 0 342 760
DE-A- 3 417 386
GB-A- 2 162 402
US-A- 4 328 425
US-A- 4 821 337
IEEE INTERNATIONAL CONFERENCE ON
ACOUSTICS, SPEECH, AND SIGNAL PROCES-
SING,PROCEEDINGS, Tampa, Florida, 26. - 29.
März 1985, Band 2, Seiten 684-687; K.M.TAO et
al.: "Adaptive noise cancelling applied to
image restoration"**

(73) Patentinhaber : **Philips Patentverwaltung
GmbH
Wendenstrasse 35c
D-20097 Hamburg (DE)**
(84) **DE**
Patentinhaber : **Philips Electronics N.V.
Groenewoudseweg 1
NL-5621 BA Eindhoven (NL)**
(84) **FR GB**

(72) Erfinder : **Hillen, Walter, Dr.
Dinkermichsweg 38
W-5100 Aachen (DE)**
Erfinder : **Rupp, Stephan
Bertholdstrasse 14
W-5190 Stolberg-Breinig (DE)**
Erfinder : **Schiebel, Ulrich, Dr.
Zehntweg 60
W-5100 Aachen (DE)**

(74) Vertreter : **von Laue, Hanns-Ulrich, Dipl.-Ing. et
al
Philips Patentverwaltung GmbH
Wendenstrasse 35c
D-20097 Hamburg (DE)**

EP 0 444 737 B1

## Beschreibung

Die Erfindung betrifft eine Anordnung nach dem Oberbegriff des Anspruchs 1. Eine solche Anordnung ist aus der EP-A-0 342 760, der DE-A-35 29 108 sowie aus den darin zitierten Literaturstellen bekannt. Bei derartigen Anordnungen ergibt sich durch unterschiedliche Empfindlichkeiten der einzelnen Elektrometersonden, durch unterschiedliche Abstände zwischen den einzelnen Elektrometersonden und der Oberfläche des Photoleiters sowie durch niederfrequentes Rauschen in den den Sonden nachgeschalteten Verstärkern das Problem, daß in dem aus den Bildwerten erzeugten Bild Streifen auftreten, die in der zweiten Richtung verlaufen.

Aufgabe der vorliegenden Erfindung ist es, eine Anordnung der eingangs genannten Art so auszugestalten, daß die Streifen weitgehend unterdrückt werden, ohne daß der Bildinhalt dadurch wesentlich beeinflußt wird. Diese Aufgabe wird durch die im Anspruch 1 angegebenen Maßnahmen gelöst.

Da bei Röntgenaufnahmen im medizinischen Anwendungsbereich so gut wie keine ausgedehnten feinen Strukturen vorhanden sind, welche exakt und ausschließlich in Zeilen oder Abtastrichtung verlaufen, tritt kaum ein Verlust an relevanter Bildinformation ein. Darüber hinaus sind die Filter in ihrer Auslegung auf den jeweiligen Anwendungsbereich anzupassen, um eine möglichst geringe Beeinträchtigung wichtiger Bildinformationen zu erzielen.

Bei der im Anspruch 2 beschriebenen Weiterbildung der Erfindung werden zunächst die in dem ersten Bildspeicher gespeicherten ursprünglichen Bildwerte mit Hilfe des Signalprozessors in der Weise bearbeitet, daß Bildwerte jeweils benachbarter Bildpunkte einer Bildzeile mit einer Hochpaßfilterfunktion beaufschlagt werden. Die so gewonnenen Bildwerte werden in dem zweiten Bildspeicher zwischengespeichert. Ausgehend von den in dem zweiten Bildspeicher zwischengespeicherten Werte werden nun die Bildwerte von in Abtastrichtung benachbarten Bildpunkten mit einer Tiefpaßfilterfunktion beaufschlagt. Diese so gewonnenen Werte werden wiederum in dem zweiten Bildspeicher zwischengespeichert, wobei die zuvor zwischengespeicherten Werte überschrieben werden können. Die nach Durchführung der Tiefpaßfilterung in dem zweiten Bildspeicher abgespeicherten Werte werden schließlich von den ursprünglichen in dem ersten Bildspeicher abgespeicherten Werte subtrahiert.

Bei dieser Vorgehensweise wird also die Hochpaßfilterfunktion mittels einer Tiefpaßfilterfunktion realisiert und umgekehrt. Dies ist möglich, da z.B. für die Erzeugung einer Hochpaßfilterfunktion zunächst eine Tiefpaßfilterfunktion vorgesehen werden kann, nach deren Durchführung die so erzeugten Werte von den ursprünglichen Werten subtrahiert werden. Im Ergebnis liegt dann wieder eine Hochpaßfilterfunktion vor. In der erfindungsgemäßen Anordnung werden zwei Funktionen nacheinander durchgeführt, wobei die dabei berechneten neuen Werte zwischengespeichert werden. Erst nach Durchführung beider Funktionen werden die so berechneten Werte von den ursprünglichen Werte subtrahiert.

Es ist im Ergebnis gleichwertig, in welcher Reihenfolge die Filterungen vorgenommen werden; es kann also auch , wie nach einer Ausgestaltung vorgesehen ist, zunächst die Filterung in Abtastrichtung und dann diejenige in Zeilenrichtung vorgenommen werden.

Der Vorteil dieser Vorgehensweise liegt vor allem darin, daß die Korrektur mit geringem Rechenaufwand erfolgen kann.

Nach einer weiteren Ausgestaltung der Erfindung ist vorgesehen, daß die in dem zweiten Bildspeicher abgespeicherten Werte vor Subtraktion von den in dem ersten Bildspeicher abgespeicherten Bildwerten mittels des Signalprozessors mit einem Skalierungsfaktor multipliziert werden, der der Einstellung der Stärke der Filterwirkung dient.

Das Maß der oben beschriebenen Filterung kann je nach Einsatzzweck bzw. Streifigkeit des abgetasteten Bildes mittels eines Skalierungsfaktors eingestellt werden. Dies kann vorteilhafterweise dadurch geschehen, daß die in dem zweiten Bildspeicher abgespeicherten Bildwerte vor Subtraktion der in dem ersten Bildspeicher abgespeicherten Werte mit einem Skalierungsfaktor beaufschlagt werden, mittels dessen sie beliebig verkleinert werden können, wodurch eine Einstellung der Filterwirkung möglich ist.

Nach einer weiteren Ausgestaltung der Erfindung ist vorgesehen, daß die Größe des Skalierungsfaktors in Abhängigkeit der von den Bildwerten repräsentierten Bildamplitude so gewählt wird, daß er in stark belichteten Bildbereichen relativ klein ist.

Um insbesondere relevante Bildwerte, welche meist einen relativ großen Signalpegel aufweisen, möglichst wenig negativ durch die Filterung zu beeinflussen, kann der Skalierungsfaktor vorteilhafterweise in Anhängigkeit der Höhe der Bildwerte, d.h. also der Bildamplitude, gewählt werden. Es wird dabei die Filterung mit steigender Bildamplitude verkleinert.

Nach einer weiteren Ausgestaltung der Erfindung ist vorgesehen, daß die Größe des Skalierungsfaktors in Abhängigkeit des Signalverlaufs im Bereich um einen Bildwert so gewählt wird, daß der Skalierungsfaktor im Bereich starker Signalsprünge relativ klein gewählt wird.

Da insbesondere Signalsprünge durch die Filterung möglichst unbeeinflußt bleiben sollen, kann der Skalierungsfaktor außerdem in Abhängigkeit des Signalverlaufs gewählt werden. Es wird dazu für mehrere nebeneinanderliegende Bildpunkte der Verlauf des Signals untersucht. Tritt in dem zu berechnenden Bildpunktebereich ein Signalsprung auf, so kann in diesem Bereich der Skalierungsfaktor klein gewählt werden, so daß eine möglichst geringe Beeinflussung des Signalsprunges eintritt.

Nach einer weiteren Ausgestaltung der Erfindung ist vorgesehen, daß die Filterfunktionen mittels zweier eindimensionaler Filterfunktionen durchgeführt werden. Die in dem Ortsbereich ausgeführten Filterfunktionen stellen an sich eine zweidimensionale Filterung dar. Um den technischen Aufwand jedoch möglichst gering zu halten, können die Filterungen vorteilhafterweise mittels zweier eindimensionaler Filterfunktion durchgeführt werden, welche mit geringerem Aufwand realisierbar sind.

Ein Ausführungsbeispiel der Erfindung wird anhand der Zeichnung näher erläutert. Es zeigen:

Fig. 1 Ein Blockschaltbild einer erfindungsgemäßen Anordnung,
Fig. 2 ein Diagramm für zwei eindimensionale Filterfunktionen,
Fig. 3 ein Diagramm, daß die bildamplitudenabhängige Wahl des Skalierungsfaktors darstellt.

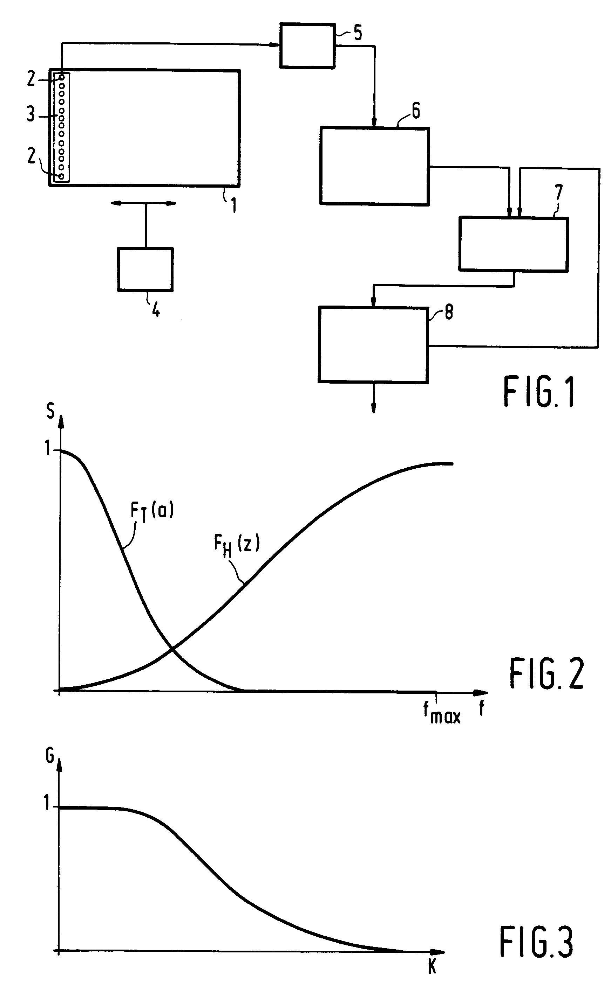

Eine in Fig. 1 schematisch dargestellte Anordnung weist einen Photoleiter 1 auf, welcher vor einer Röntgenaufnahme in der Figur nicht näher dargestellter Weise gleichmäßig aufgeladen wurde und der während einer Röntgenaufnahme in Abhängigkeit von der Intensität der Röntgenstrahlung entladen wird. Nach diesem Vorgang ist die Oberfläche des Photoleiters örtlich verschieden stark entladen worden, weist also ein Ladungsmuster auf.

Dieses Ladungsmuster wird mittels mehrerer Elektrometersonden 2 abgetastet. Es ist eine Vielzahl von Elektrometersonden vorgesehen, welcher in einer Reihe fluchtend auf einem in der Figur nur angedeuteten Träger 3 vorgesehen sind. Bei der Abtastung des Photoleiters 1 wird zunächst eine Zeile des Ladungsmusters abgetastet, d.h. es werden alle von den Sensoren 2 gelieferten Signale ausgelesen. Anschließend wird der Photoleiter 1 mittels einer in den Figuren nicht dargestellten Vorrichtung gesteuert durch eine Steuerungseinheit 4 relativ zu den Sensoren 2 um etwa die Breite einer Abtastzeile in Abtastrichtung bewegt. Diese Bewegung verläuft also senkrecht zur Zeilenrichtung, welche parallel zu dem Träger 3 der Sensoren 2 verläuft. Nachdem der Photoleiter relativ zu den Sensoren weiterbewegt worden ist, wird wiederum eine Zeile des auf dem Photoleiter 1 befindlichen Ladungsmusters mittels der Elektrometersonden 2 abgetastet. Dieser Vorgang wiederholt sich bis das gesamte Ladungsmuster abgetastet ist.

Die bei dem Abtastvorgang ausgelesenen Signale der Sensoren 2 werden gegebenenfalls verstärkt und einem A/D-Umsetzer 5 zugeführt. Die so in den digitalen Bereich umgesetzten Daten werden in einen Bildspeicher 6 eingelesen. Nach einem vollständigen Abtastvorgang des Ladungsmusters des Photoleiters 1 sind in dem Bildspeicher 6 die Bildwerte sämtlicher Bildpunkte abgespeichert. Sollte nun beispielsweise einer der Sensoren 2 eine von den übrigen Sensoren differierende Empfindlichkeit aufweisen, so wären die von diesem Sensor gelieferten Signale größer bzw. kleiner als die von den übrigen Sensoren gelieferten Signale. Dies bedeutet im Ergebnis aber nichts anderes, als daß in einem Bild, das durch Auslesen der in dem Bildspeicher 6 gespeicherten Signale darstellbar ist, eine Streifigkeit in Abtastrichtung, also quer zur Zeilenrichtung, auftritt.

Eine solche Streifigkeit könnte aber z.B. auch durch differierende Abstände zwischen den verschiedenen Sonden und dem Photoleiter 1 oder durch niederfrequente Schwankungen (Rauschen) der Sondensignale entstehen.

Diese Streifigkeit kann nun dadurch zumindest vermindert werden, daß die Bildwerte jeweils benachbarter Bildpunkte einer Bildzeile mit einer Tiefpaßfilterfunktion beaufschlagt werden. Die Bildwerte in Abtastrichtung benachbarter Bildpunkte werden dagegen mit einer Hochpaßfilterfunktion beaufschlagt. Dabei wird die Hochpaßfilterfunktion mittels einer Tiefpaßfilterfunktion realisiert und umgekehrt. Dabei kann die zwischen Bildwerten in Abtastrichtung benachbarter Bildpunkte vorzunehmende Hochpaß-Filterung auch so realisiert werden, daß mit Hilfe des Signalprozessors 7 zunächst eine Tiefpaß-Filterung durchgeführt wird. Die so gewonnenen Bildwerte werden zunächst in einem zweiten Bildspeicher 8 zwischengespeichert. Anschließend erfolgt eine Tiefpaßfilterung von Bildwerten jeweils in einer Bitzeile benachbarter Bildpunkte in der Weise, daß die Bildwerte dieser Bildpunkte mit einer Hochpaßfilterfunktion beaufschlagt werden. Es kann dabei von den in dem zweiten Bildspeicher 8 abgespeicherten Bildwerten ausgegangen werden. Die berechneten Bildwerte werden wiederum in dem zweiten Bildspeicher 8 zwischengespeichert. Die so gewonnenen neu berechneten Bildwerte, die in dem zweiten Bildspeicher 8 abgespeichert sind, werden mittels des Signalprozessors 7 von den in dem ersten Bildspeicher 6 abgespeicherten ursprünglichen Bildwerten subtrahiert. Die aus dieser Subtraktion gewonnenen neuen Bildwerte stellen die gefilterten Bildwerte dar und werden in dem zweiten Bildspeicher 8 abgespeichert, dem diese nunmehr zur weiteren Verarbeitung bzw. zur Darstellung beispielsweise auf einem Monitor entnehmbar sind.

Die oben beschriebene, im Ortsbereich vorgenommene Filterung läßt sich mathematisch wie folgt darstellen:

Bezeichnet man die vor der Filterung vorliegenden Bildwerte in einer Matrix mit der Bezeichnung S (z,a), wobei mit z Ortsfrequenzen in Zeilenrichtung und a Ortsfrequenzen in Abtastrichtung bezeichnet sind, so lassen sich die gefilterten Bildwerte S'(z,a) in folgender Weise beschreiben:

$$S'(z,a) = S(z,a) - G(k) * F_s(z,a) * S(z,a)$$

In dieser Gleichung stellt $F_s(z,a)$ die Filterfunktion dar, und $G(k)$ den Skalierungsfaktor. Die Filterfunktion $F_s(z,a)$ läßt sich dabei wie folgt beschreiben:

$$F_s(z,a) = F_H(z) * F_T(a)$$

Damit soll angedeutet sein, daß in Zeilenrichtung die benachbarten Bildwerte mit einer Hochpaßfilterfunktion und in der Abtastrichtung, die senkrecht zur Zeilenrichtung verläuft, mit einer Tiefpaßfunktion beaufschlagt werden. Diese an sich zweidimensionale Filterung kann mittels zweier eindimensionaler Filterungen vorgenommen werden.

In Fig. 2 sind zwei solcher eindimensionale Filterfunktionen exemplarisch dargestellt. In diesem Beispielsfall sind beide Filterfunktionen so gewählt, daß sie die Bildwerte S in den Extremfällen jeweils gar nicht beeinflussen oder vollständig unterdrücken. Die Wahl dieser Filterfunktionen ist von vielen Parametern abhängig, so z.B. von dem verwendeten Photoleiter, den Photosensoren, dem Abstand zwischen den Sensoren und den Photoleitern, der gewünschten Auflösung etc., und kann deshalb nicht allgemein gültig angegeben werden. Die Darstellung gemäß Fig. 2 zeigt jedoch, daß in Zeilenrichtung benachbarte Bildpunkte mit einer Hochpaßfilterfunktion beaufschlagt werden und daß in Abtastrichtung benachbarte Bildpunkte mit einer Tiefpaßfilterfunktion beaufschlagt werden. Die aus dieser Filterung hervorgegangenen Werte werden von den Ausgangswerten abgezogen, so daß im Endeffekt die genau umgekehrte Filterung eintritt, d.h. in Zeilenrichtung tritt im Ergebnis eine Tiefpaßfilterung und in Abtastrichtung senkrecht zur Zeilenrichtung im Ergebnis eine Hochpaßfilterung ein.

Die von den ursprünglich ermittelten Bildwerten, die in dem ersten Bildspeicher 6 gemäß Fig. 1 abgespeichert sind, abgezogenen Filterwerte, sind darüberhinaus mit einem Skalierungsfaktor G (k) beaufschlagt, mittels dessen das Maß der Filterung beeinflußbar ist.

Der Skalierungsfaktor G (k) kann in verschiedener Weise gewählt werden. Wird der Skalierungsfaktor definiert als

$$G(t) = 1 - k$$

so kann k in verschiedener Weise gewählt werden. Soll der Skalierungsfaktor beispielsweise in Abhängigkeit der Bildamplitude gewählt werden, so gilt:

$$k = \frac{k(z,a)}{k_{max}}$$

Worin $k_{max}$ die maximale Bildamplitude darstellt. In diesem Falle wird also der Faktor k mit steigender Bildamplitude größer, so daß der Skalierungsfaktor G(k) mit steigender Bildamplitude kleiner wird, so daß die von den ursprünglichen Bildwerten abgezogenen Filterwerte ebenfalls kleiner werden, wodurch im Endeffekt die Filterwirkung vermindert wird.

Für die Wahl des Skalierungsfaktors ist es aber auch möglich, nicht nur einfach die Bildhelligkeit zu berücksichtigen, sondern auch im Bereich der Bildpunkte, deren Bildwerte berechnet werden, den Verlauf des Signals zu berücksichtigen. Tritt z.B. in dem zu berechnenden Bildpunktbereich ein Signalsprung auf, so sollte dieser möglichst wenig beeinflußt werden. Dies kann durch folgende Wahl von k berücksichtigt werden.

$$k_1 = a * (S(z,a) - S(z + d,a))$$

Worin der Faktor a zur Bewertung der Sprunghöhe dient, welche mittels der Differenz dargestellt ist, und wobei d berücksichtigt, in welchem Bildpunkt-Abstand in Zeilenrichtung die Sprunghöhe zu berücksichtigen ist.

Bei der Berücksichtigung der Sprunghöhe kann darüberhinaus noch eine Art "Gedächtniswirkung" berücksichtigt werden, d.h. ein Nachwirken von Kontrastsprüngen auf ihre Umgebung erzielt werden. Dies kann dadurch geschehen, daß der zuvor ermittelte Wert von $k_1$ für den nächsten Wert nochmal berücksichtigt wird, wobei ein Faktor b die Gewichtung dieser Rückführung bestimmt. Es ergibt sich dann folgende Gleichung:

$$k_2 = a * (S(z,a) - S(z + d,a)) + b * k_2$$

Bei dieser Wahl von k wird also sowohl eine aktuelle Sprunghöhe wie auch eine in dem benachbarten Bereich d zuvor bestimmte Sprunghöhe berücksichtigt. Es wird damit die Wirkung erzielt, daß im Bereich relativ starker Signaländerungen die Filterwirkung reduziert wird, daß jedoch in Bereichen mit geringen Signaländerungen eine relativ große Filterwirkung eintritt. Es werden damit in Bereichen, in denen mit großer Wahrscheinlichkeit kein Nutzsignal vorhanden ist, Bildstörungen besonders gut unterdrückt.

## Patentansprüche

1. Anordnung zum Abtasten eines Ladungsbildes, welches auf einem zuvor örtlich gleichmäßig aufgeladenen Photoleiter (1) während einer Röntgenbestrahlung in Abhängigkeit von deren örtlicher Intensität erzeugt wird, mit

- einer Elektrometeranordnung (2,3) mit mehreren in einer eine erste Richtung definierenden Reihe angeordneten Elektrometersonden (2), die für jeden Bildpunkt einen der Entladung entsprechenden Bildwert liefern,
- einer Einheit (4) zur Erzeugung einer in einen zur ersten Richtung senkrechten zweiten Richtung verlaufenden Bewegung zwischen dem Photoleiter (1) und der Elektrometeranordnung (2,3) während der Abtastung des Ladungsmusters durch die Elektrometeranordnung,
- einem Analog-Digital-Wandler (5) zur Umsetzung der Bildwerte,
- einem Bildspeicher (6) zum Speichern der vom Analog-Digital-Wandler umgesetzten Bildwerte und mit einem die gespeicherten Bildwerte verarbeitenden Signalprozessor (7),

dadurch gekennzeichnet, daß der Signalprozessor (7) zur Filterung der gespeicherten Bildwerte in der Weise ausgebildet ist, daß die Bildkomponenten geschwächt werden, die in der ersten Richtung eine hohe Ortsfrequenz und in der zweiten Richtung eine niedrige Ortsfrequenz aufweisen.

2. Anordnung nach Anspruch 1,
dadurch gekennzeichnet, daß die Filterfunktionen mittels des Signalprozessors (7) und eines zweiten Bildspeichers (8) realisiert werden, indem die in dem ersten Bildspeicher eingelesenen Signalwerte mittels des Signal-prozessors (7) in der ersten Richtung mit einer Hochpaßfilterfunkton beaufschlagt und in dem zweiten Bildspeicher (8) zwischengespeichert werden, indem mittels des Signalprozessors (7) diese zwischengespeicherten Werte in der zweiten Richtung mit einer Tiefpaßfilterfunktion beaufschlagt und wiederum in dem zweiten Bildspeicher zwischengespeichert werden und indem nach Berechnung aller Werte die in dem zweiten Bildspeicher (8) zwischengespeicherten Werte von den in dem ersten Bildspeicher (6) abgespeicherten Werten subtrahiert werden.

3. Anordnung nach Anspruch 1,
dadurch gekennzeichnet, daß die Filterfunktionen mittels des Signalprozessors (7) und eines zweiten Bildspeichers (8) realisiert werden, indem die in dem ersten Bildspeicher eingelesenen Signalwerte mittels des Signalprozessors (7) in der zweiten Richtung mit einer Tiefpaßfilterfunkton beaufschlagt und in dem zweiten Bildspeicher (8) zwischengespeichert werden, indem mittels des Signalprozessors (7) diese zwischengespeicherten Werte in der ersten Richtung mit einer Hochpaßfilterfunktion beaufschlagt und wiederum in dem zweiten Bildspeicher zwischengespeichert werden und indem nach Berechnung aller Werte die in dem zweiten Bildspeicher (8) zwischengespeicherten Werte von den in dem ersten Bildspeicher (6) abgespeicherten Werten subtrahiert werden.

4. Anordnung nach Anspruch 2 oder 3,
dadurch gekennzeichnet, daß die in dem zweiten Bildspeicher (8) abgespeicherten Werte vor Subtraktion von den in dem ersten Bildspeicher abgespeicherten Bildwerten mittels des Signalprozessors mit einem Skalierungsfaktor multipliziert werden, der der Einstellung der Stärke der Filterwirkung dient.

5. Anordnung nach Anspruch 4,
dadurch gekennzeichnet, daß die Größe des Skalierungsfaktors in Abhängigkeit der von den Bildwerten repräsentierten Bildamplitude so gewählt wird, daß er in stark belichteten Bildbereichen relativ klein ist.

6. Anordnung nach Anspruch 4,
dadurch gekennzeichnet, daß die Größe des Skalierungsfaktors in Abhängigkeit des Signalverlaufs im Bereich um einen Bildwert so gewählt wird, daß der Skalierungsfaktor im Bereich starker Signalsprünge relativ klein gewählt wird.

7. Anordnung nach einem der Ansprüche 1 bis 6,
dadurch gekennzeichnet, daß die Filterfunktionen mittels zweier eindimensionaler Filterfunktionen realisiert werden.

8. Röntgenuntersuchungsgerät mit einer Quelle zur Erzeugung von Röntgenstrahlung,
dadurch gekennzeichnet, daß zur Erzeugung eines Röntgenbildes eine Anordnung nach einem der vorhergehenden Ansprüche vorgesehen ist.

EP 0 444 737 B1

**Claims**

1. A device for scanning a charge image which is generated on a previously locally uniformly charged photoconductor (1) during an exposure to X-rays in dependence on the local intensity thereof, comprising
   - an electrometer device (2,3) with a plurality of electrometer probes (2) which are arranged in a row and which supply for each pixel an image value which corresponds to the discharge,
   - a unit (4) for producing a displacement in a second direction, perpendicular to the first direction, between the photoconductor (1) and the electrometer device (2,3) during the scanning of the charge pattern by the electrometer device,
   - an anlog-to-digital converter (5) for converting the image values,
   - an image memory (6) for storing the image values converted by the analog-to-digital converter and a processor (7) which processes the images values stored,
   characterized in that the signal processor (7) is conceived to filter the image values stored in such a manner that the image components having a high local frequency in the first direction and a low local frequency in the second direction are attenuated.

2. A device as claimed in Claim 1, characterized in that the filter functions are realised by means of the signal processor (7) and a second image memory (8) in that the signal values stored in the first image memory are subjected to a high-pass filter function in the first direction by means of the signal processor (7) and are buffered in the second image memory (8), in that the signal processor (7) subjects these buffered values to a low-pass filter function in the second direction and buffers these values again in the second image memory, and in that after calculation of all values the values buffered in the second image memory (8) are subtracted from the values stored in the first image memory (6).

3. A device as claimed in Claim 1, characterized in that the filter functions are realised by means of the signal processor (7) and a second image memory (8) in that the signal values stored in the first image memory are subjected, using the signal processor (7), to a low-pass filter function in the second direction and are buffered in the second image memory (8), in that the signal processor (7) subjects these buffered values in the first direction to a high-pass filter function and buffers these values in the second image memory again, and in that after calculation of all values the values buffered in the second image memory (8) are subtracted from the values stored in the first image memory (6).

4. A device as claimed in Claim 2 or 3, characterized in that the values stored in the second image memory (8) are multiplied by the signal processor, prior to subtraction from the image values stored in the first image memory, by a scaling factor which serves to adjust the filter effect.

5. A device as claimed in Claim 4, characterized in that the value of the scaling factor is chosen in dependence on the image amplitude represented by the image values so that it is comparatively small in highly exposed image areas.

6. A device as claimed in Claim 4, characterized in that the value of the scaling factor is chosen in dependence on the signal variation in the zone around an image value so that the scaling factor is chosen to be comparatively small at the area of strong signal gradients.

7. A device as claimed in any one of the Claims 1 to 6, characterized in that the filter functions are realised by means of two one-dimensional filter functions.

8. An X-ray examination apparatus comprising a source for generating X-rays, characterized in that a device as claimed in any one of the preceding claims is provided so as to generate an X-ray image.

**Revendications**

1. Dispositif de lecture par balayage d'une image de charges qui est produite sur un photoconducteur (1) chargé préalablement localement de manière uniforme pendant une exposition à des rayons X, en fonction de leur intensité locale, comportant :
   - un dispositif électrométrique (2, 3) avec plusieurs sondes électrométriques (2) disposées en une rangée définissant une première direction, ces sondes délivrant pour chaque point d'image une valeur

6

d'image correspondant à la décharge;
- une unité (4) pour produire un déplacement dans une deuxième direction perpendiculaire à la première direction entre le photoconducteur (1) et le dispositif électrométrique (2, 3) au cours du balayage de la configuration de charges par le dispositif électrométrique;
- un convertisseur analogique/numérique (5) pour convertir les valeurs d'image, et
- une mémoire d'image (6) pour stocker les valeurs d'image converties par le convertisseur analogique/numérique, et un processeur de signaux (7) traitant les valeurs d'image stockées,
    caractérisé en ce que le processeur de signaux (7) est conçu pour le filtrage des valeurs d'image stockées de manière à affaiblir les composantes de l'image qui présentent dans la première direction une fréquence locale haute et dans la deuxième direction une fréquence locale basse.

2. Dispositif selon la revendication 1, caractérisé en ce que les fonctions de filtrage sont réalisées à l'aide du processeur de signaux (7) et d'une deuxième mémoire d'image (8) en soumettant les valeurs de signaux introduites dans la première mémoire d'image, à l'aide du processeur de signaux (7), dans la première direction, à une fonction de filtrage passe-haut et en les stockant temporairement dans la deuxième mémoire d'image (8), en soumettant, à l'aide du processeur de signaux (7), ces valeurs stockées temporairement, dans la deuxième direction, à une fonction de filtrage passe-bas et à nouveau en les stockant temporairement dans la deuxième mémoire d'image, et en soustrayant, après calcul de toutes les valeurs, les valeurs stockées temporairement dans la deuxième mémoire d'image (8) des valeurs stockées dans la première mémoire d'image (6).

3. Dispositif selon la revendication 1, caractérisé en ce que les fonctions de filtrage sont réalisées à l'aide du processeur de signaux (7) et d'une deuxième mémoire d'image (8), par le fait que les valeurs de signaux introduites dans la première mémoire d'image, à l'aide du processeur de signaux (7), dans la deuxième direction, sont soumises à une fonction de filtrage passe-bas et sont stockées temporairement dans la deuxième mémoire d'image (8), par le fait que ces valeurs stockées temporairement, à l'aide du processeur de signaux (7), dans la première direction, sont soumises à une fonction de filtrage passe-haut et sont à nouveau stockées temporairement dans la deuxième mémoire d'image, par le fait qu'après le calcul de toutes les valeurs, les valeurs stockées temporairement dans la deuxième mémoire d'image (8) sont soustraites des valeurs mémorisées dans la première mémoire d'image (6).

4. Dispositif selon la revendication 2 ou 3, caractérisé en ce que les valeurs stockées dans la deuxième mémoire d'image (8) sont, avant soustraction des valeurs d'image stockées dans la première mémoire d'image, à l'aide du processeur de signaux, multipliées par un facteur d'échelle qui sert à régler l'intensité de l'effet de filtrage.

5. Dispositif selon la revendication 4, caractérisé en ce que l'ordre de grandeur du facteur d'échelle est choisi en fonction de l'amplitude de l'image représentée par les valeurs d'image, de telle sorte qu'il soit relativement petit dans les zones d'image fortement éclairées.

6. Dispositif selon la revendication 4, caractérisé en ce que l'ordre de grandeur du facteur d'échelle est choisi en fonction de la variation du signal dans la zone entourant une valeur d'image, de telle sorte que le facteur d'échelle soit relativement petit dans la zone des sauts de signal importants.

7. Dispositif selon l'une quelconque des revendications 1 à 6, caractérisé en ce que les fonctions de filtrage sont réalisées à l'aide de deux fonctions de filtrage unidimensionnelles.

8. Appareil d'examen radiographique comportant une source pour produire des rayons X, caractérisé en ce qu'il est prévu un dispositif selon l'une quelconque des revendications précédentes pour la production d'une image radiographique.

FIG.1

FIG.2

FIG.3